# EUROPÄISCHE PATENTANMELDUNG

(11) **EP 4 517 570 A1**
(43) Veröffentlichungstag der Anmeldung: **05.03.2025**
(21) Anmeldenummer: 23193701.2
(22) Anmeldetag: 28.08.2023
(51) Int. Cl.: G06F 21/57, G06F 21/51, G06F 21/64

(54) **VERFAHREN UND SYSTEM ZUM ÜBERPRÜFEN DER INTEGRITÄT EINER REGELWERKSDATENBANK**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Es wird ein Verfahren zum Überprüfen der Integrität einer Regelwerksdatenbank (2) vor dem Ausführen einer Anwendung (4) vorgeschlagen, wobei in der Regelwerksdatenbank (2) eine oder mehrere Ausführungsberechtigungen für eine oder mehrere Anwendungen (4) gespeichert sind, wobei die Regelwerksdatenbank (2) des Weiteren Regeln für die eine oder mehreren Anwendungen (4) aufweist, wobei das Verfahren aufweist: vor dem Ausführen einer Anwendung (4), Abrufen (S2) einer Ausführungsberechtigung der auszuführenden Anwendung (4) von der Regelwerksdatenbank (2) durch eine Ausführungseinheit (6) und Überprüfen (S4) der Ausführungsberechtigung, wenn die Überprüfung (S4) der Ausführungsberechtigung der auszuführenden Anwendung (4) durch die Ausführungseinheit (6) positiv ist, Vergleichen (S12), durch die Anwendung (4), einer gespeicherten Prüfsumme (10) der in der Regelwerksdatenbank (2) gespeicherten Regeln für diese Anwendung (4) mit einer aktuellen Prüfsumme der in der Regelwerksdatenbank (2) gespeicherten Regeln für diese Anwendung (4), und wenn die gespeicherte Prüfsumme (10) mit der aktuellen Prüfsumme übereinstimmt, Starten (S13) der Anwendung (4).

Hierdurch ist es möglich, nicht nur die Authentizität und Integrität einer Anwendung zu überprüfen, sondern auch der für diese Anwendung gespeicherten Regeln.

## Beschreibung

Die vorliegende Erfindung betrifft ein Verfahren zum Überprüfen der Integrität einer Regelwerksdatenbank vor dem Ausführen einer Anwendung. Darüber hinaus betrifft die vorliegende Erfindung ein System zum Überprüfen der Integrität einer Regelwerksdatenbank vor dem Ausführen einer Anwendung. Des Weiteren betrifft die vorliegende Erfindung ein Computerprogrammprodukt, welches auf einer programmgesteuerten Einrichtung die Durchführung des wie oben erläuterten Verfahrens veranlasst.

Um zu verhindern, dass auf einem System befindliche Software oder Anwendungen nach der ursprünglichen Erstellung in nicht autorisierten Installationsprozessen modifiziert oder zusätzlich installiert werden, und um sicherzustellen, die auf dem System befindliche Software oder Anwendungen ausschließlich durch bestimmte Benutzergruppen ausgeführt werden können, existieren so genannte Application-Whitelisting-Lösungen, welche Bestandteil des Betriebssystems sind oder in dieses integriert sind. Mit Hilfe solcher Lösungen können Ausführungsregeln sowohl im Audit- als auch Enforcement-Modus konfiguriert werden und in einer Application-Whitelisting-Regelwerksdatenbank abgelegt werden. Diese Ausführungsregeln erlauben und/oder verbieten die Ausführung bestimmter Programme basierend auf vordefinierten Rahmenbedingungen (z.B. bestimmte Benutzer). Die Ausführungsregeln können die auszuführenden Programme referenzieren, indem für diese ein Pfad, eine Signatur oder ein Hashwert hinterlegt wird. Auch eine Kombination aus den drei genannten Kriterien ist möglich.

Ein Problem, welches hierbei besteht, ist, dass Software oder Anwendungen, die auf Installationen ausgeliefert werden, im Nachgang durch OEM-Hersteller und auch den Endkunden durch die Installation eigener Software-Komponenten erweitert werden können. Hierbei entsteht jedoch das Problem, dass sowohl der Administrator des Endkunden als auch der OEM-Hersteller selbst zur Ausführung der erforderlichen Tätigkeiten über administrative Berechtigungen auf dem System verfügen muss und somit auch Zugriff auf die lokal auf dem System abgelegte Application-Whitelisting-Regelwerksdatenbank erhält.

Es wird darauf hingewiesen, dass, unabhängig vom grammatikalischen Geschlecht eines bestimmten Begriffes, Personen mit männlicher, weiblicher oder anderer Geschlechteridentität mit umfasst sind.

Der oben genannte Zugriff auf die Application-Whitelisting-Regelwerksdatenbank kann bei der Erteilung administrativer Berechtigungen nicht beschränkt werden. Folglich ist somit das dort durch den ursprünglichen Ersteller hinterlegte Regelwerk, welches die Authentizität und Integrität sowie die Ausführungsberechtigungen für bestimmte Benutzergruppen der Ersteller eigenen Software definiert, nicht mehr geschützt und kann beispielsweise durch den Administrator des Endanwenders oder den OEM-Hersteller beliebig modifiziert werden.

Wie bereits oben erwähnt, kann der Zugriff auf die Application-Whitelisting-Regelwerksdatenbank nur beschränkt werden, solange der Benutzer über keine administrativen Berechtigungen verfügt. Diese sind jedoch in den meisten Fällen zur Installation weiterer Software erforderlich, sodass z.B. dem Administrator des Endkunden oder einem OEM-Hersteller vertraut werden muss, dass dieser die Ausführungsberechtigungen innerhalb der Application-Whitelisting-Regelwerksdatenbank nicht modifiziert.

Vor diesem Hintergrund besteht eine Aufgabe der vorliegenden Erfindung darin, eine Möglichkeit bereitzustellen, bei der der Hersteller einer Anwendung auf einem System bestimmte Ausführungsberechtigungen und Beschränkungen zur Sicherung der Integrität und Authentizität zuweisen kann, jedoch in nachgelagerten Verarbeitungsschritten Benutzern mit administrativen Berechtigungen weitere Anpassungen erlaubt werden und gleichzeitig erkannt wird, wenn in diesen nachgelagerten Verarbeitungsschritten durch diese Benutzer nicht autorisierte Anpassungen durchgeführt wurden.

Demgemäß wird ein Verfahren zum Überprüfen der Integrität einer Regelwerksdatenbank vor dem Ausführen einer Anwendung vorgeschlagen, wobei in der Regelwerksdatenbank eine oder mehrere Ausführungsberechtigungen für eine oder mehrere Anwendungen gespeichert sind, wobei die Regelwerksdatenbank des Weiteren Regeln für die eine oder mehreren Anwendungen aufweist.

Eine solche Regelwerksdatenbank wird auch als Application-Whitelisting-Regelwerksdatenbank bezeichnet. In dieser sind Ausführungsberechtigungen hinterlegt, die in einem ersten Schritt durch ein Betriebssystem bzw. eine Ausführungseinheit des Betriebssystems (z.B. einen Kern oder Kernel) überprüft werden können. Der Hersteller einer Software oder Anwendung kann mit der Auslieferung der Anwendung eine Application-Whitelisting-Regelwerksdatenbank mitliefern.

Unter einer Anwendung wird in diesem Zusammenhang ein Programm oder eine Software verstanden, die auf einem Betriebssystem gespeichert werden und/oder diesem bereitgestellt werden kann. Die Anwendung kann dann durch den Betriebssystemkern, auch Ausführungseinheit genannt, aufgerufen werden.

Das Verfahren weist nun vor dem Ausführen einer Anwendung das Abrufen einer Ausführungsberechtigung der auszuführenden Anwendung von der Regelwerksdatenbank durch eine Ausführungseinheit und Überprüfen der Ausführungsberechtigung auf. Auf diese Weise kann vor dem Starten bzw. Aufrufen der Anwendung bereits sichergestellt werden, dass es sich bei der Anwendung um keine Schadsoftware handelt. Will ein Benutzer die Anwendung starten, wird also zunächst in der Regelwerksdatenbank die Ausführungsberechtigung überprüft. Unter Ausführungsberechtigung wird dabei im Folgenden zum einen die Ausführungsberechtigung des Benutzers verstanden und - sofern vorhanden - auch die Überprüfung der Integrität und Authentizität der zu startenden Anwendung mit Hilfe von Hashes oder Signaturen verstanden. Somit kann nicht nur die Ausführungsberechtigung des Benutzers überprüft werden, sondern auch die Echtheit der Anwendung selbst. Ist die Überprüfung erfolgreich, wird das Programm durch die Ausführungseinheit, z.B. einen Betriebssystemkern und/oder eine mit diesem zusammenarbeitende Application-Whitelisting-Komponente, zunächst zur Ausführung freigegeben.

Wenn die Überprüfung der Ausführungsberechtigung positiv ist, wird in einem nächsten Schritt durch die Anwendung eine gespeicherte Prüfsumme der in der Regelwerksdatenbank gespeicherten Regeln für diese Anwendung mit einer aktuellen Prüfsumme der in der Regelwerksdatenbank gespeicherten Regeln für diese Anwendung überprüft. Bei den Regeln, auch Regelwerk genannt, handelt es sich um Berechtigungen von Benutzern für die auszuführende Anwendung und/oder um sonstige, möglicherweise für andere Benutzer(gruppen) definierte, Ausführungsbeschränkungen der Anwendung.

Wenn die gespeicherte Prüfsumme mit der aktuellen Prüfsumme übereinstimmt, startet die Anwendung. Das bedeutet, dass die Anwendung selbst, nach dem sie durch die Ausführungseinheit des Betriebssystems aufgerufen wurde, einen Vergleich einer aktuellen Prüfsumme, z.B. eines Hashwertes oder irgendeiner anderen Art von vorab festgelegter Checksumme, mit einer Prüfsumme der ursprünglichen Regelwerksdatenbank durchführt. Bei der Prüfsumme der ursprünglichen Regelwerksdatenbank handelt es sich dabei um eine Prüfsumme, die über die Regelwerksdatenbank, bzw. Teile der Regelwerksdatenbank, die der auszuführenden Anwendung zugeordnet sind, erstellt wurde, bevor Änderungen durch Benutzer, insbesondere Benutzer mit administrativen Berechtigungen, oder OEM-Anbieter an der Regelwerksdatenbank vorgenommen wurden. Auf diese Weise kann die Anwendung überprüfen, ob an den ihr zugeordneten Regeln oder Daten in der Regelwerksdatenbank unautorisierte Änderungen vorgenommen wurden. Somit wird sichergestellt, dass die Anwendung nicht modifiziert wurde und die durch die Regelwerksdatenbank definierten Regeln nicht durch eine Anpassung der Software- bzw. Anwendungskonfiguration auf dem System, beispielsweise durch einen privilegierten Benutzer mit Installationsberechtigungen, verändert wurden.

Wenn die gespeicherte Prüfsumme der in der Regelwerksdatenbank gespeicherten Regeln für diese Anwendung mit der aktuellen Prüfsumme nicht übereinstimmt, bricht gemäß einer Ausführungsform die Anwendung ab, startet in einem geschützten Modus oder startet mit Ausgabe einer Warnung. Die konkrete Ausgestaltung der Ausführung in einem solchen Fall kann beispielsweise von einem Sicherheitsniveau der Anwendung abhängen. Handelt es sich bei der Anwendung um eine Anwendung, die potenziell Schäden an dem Betriebssystem oder anderen Komponenten oder Daten verursachen kann, sollte die Anwendung direkt abbrechen oder zumindest in einem geschützten Modus starten. In einem solchen geschützten Modus kann beispielsweise nur ein eingeschränkter Zugriff auf weitere Daten vorgesehen sein. Handelt es sich bei der Anwendung um eine weniger sicherheitskritische Anwendung, kann diese auch nur eine Warnung ausgeben und entweder direkt nach Ausgabe der Warnung starten oder beispielsweise nach Bestätigung durch einen Benutzer.

Gemäß einer weiteren Ausführungsform sind die Regeln der auszuführenden Anwendung in der Regelwerksdatenbank in mehrere Bereiche aufgeteilt, wobei ein oder mehrere Bereiche aus der Berechnung der Prüfsumme ausgenommen sind. Auf diese Weise können manche der der auszuführenden Anwendung zugeordneten Bereiche der Regelwerksdatenbank definiert werden, die von der Überprüfung ausgenommen sind und daher auch nach der ursprünglichen Erstellung durch einen entsprechend privilegierten Benutzer, d.h. einen Benutzer mit den entsprechenden (Administrator-)Rechten, z.B. einen OEM-Anbieter, geändert werden können. Beispielsweise kann definiert sein, dass solche privilegierte Benutzer nur in diesen Bereichen Änderungen vornehmen können. Da diese Bereiche bei der Berechnung der gespeicherten und der aktuellen Prüfsumme nicht berücksichtigt werden, haben Änderungen in diesen Bereichen keinen Einfluss auf das Ergebnis eines Vergleichs der aktuellen und der gespeicherten Prüfsumme.

Gemäß einer weiteren Ausführungsform ist die gespeicherte Prüfsumme integritäts- und authentizitätsgesichert auf einem Dateisystem des Systems, insbesondere des Betriebssystems, oder auf einem Server gespeichert, wobei die Anwendung die gespeicherte Prüfsumme von dem Dateisystem oder dem Server abruft. Alternativ kann die gespeicherte Prüfsumme integritäts- und authentizitätsgesichert in der Anwendung selbst gespeichert sein.

Unter integritäts- und authentizitätsgesichert wird in diesem Zusammenhang insbesondere verstanden, dass die gespeicherte Prüfsumme nicht verändert werden kann und authentisch ist. Dies kann beispielsweise über eine überprüfbare Signatur der Datei, in der die Prüfsumme gespeichert ist, sichergestellt werden.

Es ist ebenfalls möglich, dass die Prüfsumme, bzw. eine Datei mit der Prüfsumme, fest in die Anwendung einkompiliert wird. In diesem Fall sollte die Anwendung mit Hilfe einer Signatur oder eines Hashes innerhalb der Regelwerksdatenbank referenziert werden, um zu verhindern, dass ein Angreifer den Bereich der Prüfsumme beliebig überschreibt.

Signaturbasierte Überprüfungen können durchgeführt werden, indem innerhalb des Regelwerkes eine geschützte Anwendung nicht über den Pfad oder die Prüfsumme referenziert wird, sondern über die Dateisignatur der Anwendung.

Auf diese Weise kann dem Ersteller der Regelwerksdatenbank die Möglichkeit gegeben werden, diese Datenbank zu erstellen, bevor die tatsächliche, zu speichernde, Prüfsumme der Daten in der Regelwerksdatenbank, die der Anwendung zugeordnet sind, bekannt ist.

Gemäß einer weiteren Ausführungsform ermittelt die Anwendung die Prüfsumme der Regeln, die der auszuführenden Anwendung zugeordnet sind, aus der Regelwerksdatenbank über eine zwischengeschaltete Schnittstelle, insbesondere einen Proxy. Durch das Zwischenschalten einer solchen Schnittstelle muss der Anwendung nicht direkter Zugriff auf das gespeicherte Regelwerk gegeben werden. Hat die Anwendung direkten Zugriff auf den Speicherort des Regelwerkes, d.h. die Regelwerksdatenbank, könnte die Anwendung bzw. Benutzer der Anwendung dadurch auch Zugriff auf die auf dem System implementierten Ausführungsbeschränkungen erhalten und somit Informationen über die eigenen oder die Ausführungsberechtigungen anderer Benutzergruppen erhalten.

Gemäß einer weiteren Ausführungsform sind die Regeln der auszuführenden Anwendung in der Regelwerksdatenbank in mehrere Bereiche aufgeteilt, wobei die Anwendung für die mehreren Bereiche jeweils eine aktuelle Prüfsumme bestimmt und mit korrespondierenden gespeicherten Prüfsummen vergleicht. Bei den mehreren Bereichen kann es sich beispielsweise um einen oder mehrere Bereiche handeln, die mit initialer Erstellung der Anwendung erstellt wurden, und um einen oder mehrere Bereiche, die anschließend durch einen Benutzer geändert wurden. Da nicht nur eine, sondern mehrere Prüfsummen verglichen werden können, können diese verschiedenen Bereiche auch einzeln überprüft werden.

Bei der Prüfsumme kann es sich somit auch um eine Prüfsumme von Teilen der Regelwerksdatenbank handeln, die im Nachhinein, z.B. durch einen OEM-Anbieter vorgenommen wurden. Auf diese Weise kann die Anwendung nicht nur überprüfen, ob unautorisierte Änderungen an den ursprünglichen Daten der Regelwerksdatenbank, bzw. der ursprünglichen, der auszuführenden Anwendung zugeordneten Daten, vorgenommen wurden, sondern auch, ob unautorisierte Änderungen an Weiterentwicklungen der Regelwerksdatenbank vorgenommen wurden. In diesem Fall kann die Anwendung beispielweise eine Überprüfung von zwei verschiedenen Prüfsummen (einmal der ursprünglichen Datenteile und einmal der geänderten Datenteile) durchführen, wobei hier auch zwei entsprechende gespeicherte Prüfsummen vorliegen.

Es sollte beachtet werden, dass es sich bei den zu prüfenden Daten der Regelwerksdatenbank immer um Daten handeln, die der auszuführenden Anwendung zugeordnet sind. In der Regelwerksdatenbank können auch weitere Daten, die weiteren Anwendungen zugeordnet sind, gespeichert sein.

Gemäß einer weiteren Ausführungsform ist in der auszuführenden Anwendung definiert, welche der mehreren Bereiche zu prüfen sind. Es können also nicht nur verschiedene Bereiche geprüft werden, sondern es kann auch festgelegt werden, dass nur manche der Bereiche geprüft werden, wie bereits oben erläutert. Auf diese Weise können auf einfache Weise Bereiche definiert werden, in denen ein Benutzer eigene Regeln erstellen kann, die keinen Einfluss auf eine Überprüfung der Prüfsumme der Regelwerksdatenbank haben.

Gemäß einer weiteren Ausführungsform vergleicht die Anwendung die Prüfsumme der in der Regelwerksdatenbank gespeicherten Regeln für diese Anwendung mit einer aktuellen Prüfsumme der in der Regelwerksdatenbank gespeicherten Regeln für diese Anwendung in vordefinierten Abständen. Somit kann nicht nur zu Beginn des Startens bzw. Aufrufens der Anwendung eine Überprüfung der Regelwerksdatenbank erfolgen, sondern auch während der Laufzeit der Anwendung. Auf diese Weise kann sichergestellt werden, dass auch während der Laufzeit der Anwendung keine unautorisierten Änderungen an den Daten der Regelwerkdatenbank vorgenommen werden. Sollte während einer Überprüfung der Prüfsumme während der Laufzeit festgestellt werden, dass die aktuelle Prüfsumme nicht mit der gespeicherten Prüfsumme übereinstimmt, kann die Anwendung z.B. abbrechen, eine Warnung ausgeben oder in einen geschützten Modus wechseln. Gemäß einer weiteren Ausführungsform startet die Ausführungseinheit die Anwendung durch Aufruf eines Prozesses der Anwendung, wobei der Aufruf des Prozesses die Überprüfung der Prüfsumme der Regelwerksdatenbank startet. Wie bereits oben erläutert, beginnt die Ausführungseinheit mit der Überprüfung der Integrität und Authentizität der Anwendung selbst, durch Abfragen der Regelwerkdatenbank. Anschließend startet die Ausführungseinheit zwar die Anwendung, allerdings initiiert dieser Start nur einen Aufruf des Prozesses der Überprüfung der Prüfsumme. Erst wenn diese auch positiv verläuft, startet die Anwendung vollständig. Während des Prozesses der Überprüfung der Prüfsumme befindet sich die Anwendung, bzw. der eigentliche Prozess der Anwendung, noch in einem Schwebezustand, d.h. kann noch abgebrochen, eingeschränkt gestartet oder vollständig gestartet werden.

Gemäß einem weiteren Aspekt wird ein System zum Überprüfen der Integrität einer Regelwerksdatenbank vor dem Ausführen einer Anwendung vorgeschlagen. Das System weist eine Regelwerksdatenbank, in der eine oder mehrere Ausführungsberechtigungen für eine oder mehrere Anwendungen gespeichert sind, wobei die Regelwerksdatenbank des Weiteren Regeln für die eine oder mehreren Anwendungen aufweist, und eine Ausführungseinheit auf, die dazu ausgebildet ist, eine Anwendung auszuführen. Bei der Ausführungseinheit kann es sich beispielsweise um einen Kernel oder Kern eines Betriebssystems handeln, auf dem die Anwendung ausgeführt werden soll.

Die Ausführungseinheit ist dazu ausgebildet, vor dem Ausführen der Anwendung eine Ausführungsberechtigung der auszuführenden Anwendung von der Regelwerksdatenbank abzurufen und zu überprüfen. Wenn die Überprüfung der Ausführungsberechtigung der auszuführenden Anwendung durch die Ausführungseinheit positiv ist, ist die Anwendung dazu ausgebildet, eine gespeicherte Prüfsumme der in der Regelwerksdatenbank gespeicherten Regeln für diese Anwendung mit einer aktuellen Prüfsumme der in der Regelwerksdatenbank gespeicherten Regeln für diese Anwendung zu vergleichen. Wenn die gespeicherte Prüfsumme mit der aktuellen Prüfsumme übereinstimmt, ist die Anwendung dazu ausgebildet, zu starten.

Wie bereits oben erläutert, können gemäß einer Ausführungsform die Regeln der auszuführenden Anwendung in der Regelwerksdatenbank in mehrere Bereiche aufgeteilt sein, wobei ein oder mehrere Bereiche aus der Berechnung der Prüfsumme ausgenommen sind. Auf diese Weise können Bereiche vorgesehen werden, an denen Benutzer der Anwendung Änderungen vornehmen können, ohne dass dies einen Einfluss auf eine Überprüfung der Prüfsumme hat.

Des Weiteren können für die mehreren Bereiche unterschiedliche Prüfsummen definiert sein. Dadurch können durch Prüfsummen für verschiedene Bereiche nicht nur der Ersteller der Anwendung und der ursprünglichen Regeln, sondern auch nachfolgende Bearbeiter ihre neu hinzugefügten (eigenen) Regeln in eine Überprüfung (mit eigener Prüfsumme) einbeziehen lassen.

Des Weiteren können die Regeln der auszuführenden Anwendung in der Regelwerksdatenbank zwar in mehrere Bereiche aufgeteilt sein, jedoch keiner dieser Bereiche von der Berechnung der Prüfsumme ausgenommen sein. In diesem Fall kann die Anwendung dazu ausgebildet sein, für jeden der mehreren Bereiche jeweils eine aktuelle Prüfsumme zu bestimmen und mit korrespondierenden gespeicherten Prüfsummen zu vergleichen. Dies stellt eine besonders umfassende Überprüfung der Regelwerksdatenbank bereit.

Gemäß einer weiteren Ausführungsform ist die gespeicherte Prüfsumme integritäts- und authentizitätsgesichert auf einem Dateisystem des Systems oder auf einem Server gespeichert. Bei dem Dateisystem des Systems kann es sich beispielweise um einen Teil eines Betriebssystems handeln. Der Server kann insbesondere ein Webserver sein. Dies hat den Vorteil, dass die der auszuführenden Anwendung zugeordnete Prüfsumme an einer beliebigen Stelle, getrennt von der Anwendung und/oder der Regelwerksdatenbank, gespeichert werden kann. Alternativ kann die gespeicherte Prüfsumme integritäts- und authentizitätsgesichert in der Anwendung gespeichert sein.

Gemäß einer weiteren Ausführungsform weist das System eine Schnittstelle, insbesondere einen Proxy, auf, der zwischen der Anwendung und der Regelwerksdatenbank angeordnet ist. Die Anwendung muss somit keinen direkten Zugriff auf die Regelwerksdatenbank haben. Dadurch können auch andere Daten, die sich in der Regelwerksdatenbank befinden, vor einem Zugriff durch die Anwendung, bzw. einen Benutzer der Anwendung, geschützt werden. Die Anwendung ist dabei dazu ausgebildet, die Regeln, die der auszuführenden Anwendung zugeordnet sind, aus der Regelwerksdatenbank über die Schnittstelle abzufragen. Alternativ kann die Anwendung auch nur die aktuelle Prüfsumme von der Schnittstelle abrufen. In diesem Fall kann die Schnittstelle die Berechnung der Prüfsumme durchführen und der Anwendung die aktuelle Prüfsumme übergeben. Diese kann dann den Vergleich zwischen der aktuellen und der gespeicherten Prüfsumme durchführen.

Die jeweilige Einheit, zum Beispiel Ausführungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuereinheit auf einem Server oder ähnlichem ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene System beschriebenen Ausführungsformen und Merkmale gelten für das vorgeschlagene Verfahren entsprechend und umgekehrt.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm eines Systems zum Überprüfen der Integrität einer Regelwerksdatenbank vor dem Ausführen einer Anwendung;
- Fig. 2: zeigt ein schematisches Sequenzdiagramm eines Verfahrens zum Überprüfen der Integrität einer Anwendung vor dem Ausführen der Anwendung;
- Fig. 3: zeigt ein schematisches Sequenzdiagramm eines Verfahrens zum Überprüfen der Integrität einer Regelwerksdatenbank einer Anwendung vor dem Ausführen der Anwendung; und
- Fig. 4: zeigt ein Zustandsdiagramm des Verfahrens von Fig. 3.

In den Figuren sind gleiche oder funktionsgleiche Elemente mit denselben Bezugszeichen versehen worden, sofern nichts anderes angegeben ist.

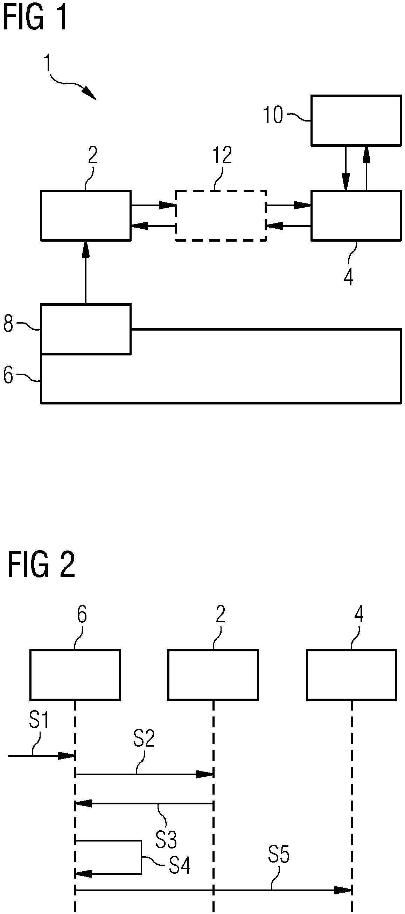

Fig. 1 zeigt ein System 1 zum Überprüfen der Integrität einer Regelwerksdatenbank 2, auch Application-Whitelisting-Regelwerk genannt, in der Regeln für eine Anwendung 4 gespeichert sind. Das System 1 kann ein Betriebssystem sein oder ein Betriebssystem aufweisen. Die Anwendung 4 kann ein Applikationsprogramm oder eine eingebundene Bibliothek oder ähnliches sein. Die Anwendung 4 kann durch einen Betriebssystemkern 6 eines Betriebssystems aufgerufen werden. Vor dem Aufruf der Anwendung 4 kann der Betriebssystemkern 4 oder eine in diesem implementierte Application-Whitelisting-Komponente 8 die Authentizität der Anwendung 4 überprüfen.

Dies wird unter Bezugnahme auf Fig. 2 näher erläutert. In einem ersten Schritt S1 wird zunächst ein Aufruf der Anwendung 4 durch einen Benutzer durch den Betriebssystemkern 6 erkannt. Dieser kann dann die Anwendung 4 auf ihre Authentizität hin überprüfen.

Der Hersteller der Anwendung 4 liefert mit der Auslieferung seiner Anwendung 4 die Regelwerksdatenbank 2 mit bzw. installiert diese vor. Wird die Anwendung 4 durch den Betriebssystemkern 6 aufgerufen, wird dieser oder eine Application-Whitelisting-Komponente 8 des Betriebssystemkerns 6, zunächst eine Berechtigung der Anwendung 4 an sich mit Hilfe der Regelwerksdatenbank 2 überprüfen.

Hierzu wird in Schritt S2 aus der Regelwerksdatenbank 2 eine Authentifizierung der Anwendung 4 abgerufen. Diese Information wird in Schritt S3 an den Betriebssystemkern 6 übergeben und dann durch diesen in Schritt S4 überprüft.

Bei einem positiven Ergebnis der Überprüfung der Ausführungsberechtigung der Anwendung 4 durch Überprüfung der Authentizität kann nun in einem nächsten Schritt S5 die Anwendung 4 durch den Betriebssystemkern 6 aufgerufen werden.

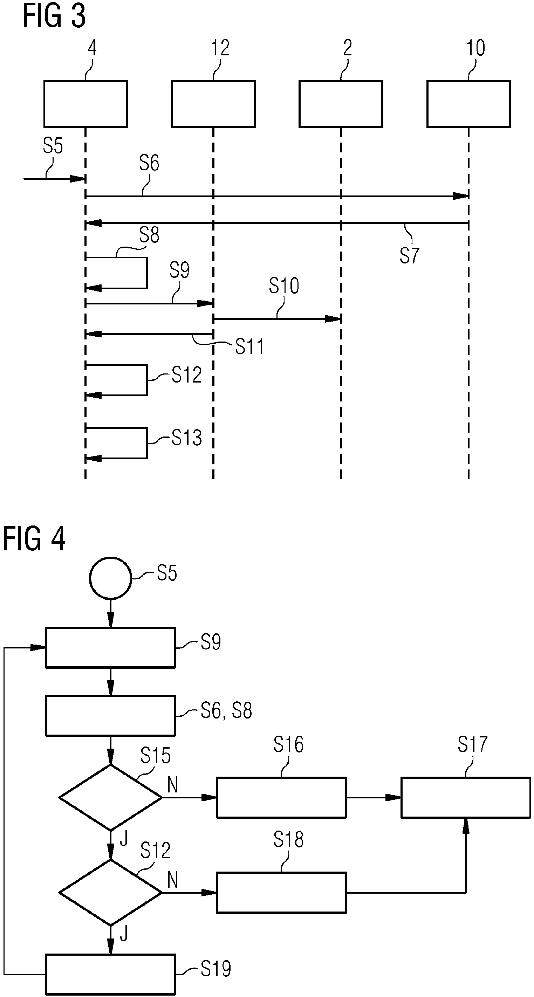

Wie nun unter Bezugnahme auf Fig. 3 beschrieben wird, kann, um nun nicht nur die Authentizität der Anwendung 4 selbst, sondern auch deren mitgelieferten Regeln in der Regelwerksdatenbank 2 zu überprüfen, die Anwendung 4 eine zu erwartende Prüf- oder Checksumme 10 in Schritt S6 abrufen. Diese Prüfsumme 10 ist eine Prüfsumme, die über Regeln in der Regelwerksdatenbank 2 erstellt wurde, die der Anwendung 4 zugeordnet sind. Diese Prüfsumme 10 kann entweder integritätsgesichert (z.B. mit Hilfe einer Dateisignatur) auf einem Dateisystem des Betriebssystems oder z.B. auf einem entfernten Webserver abgelegt sein, welcher von der zu schützenden und aufzurufenden Anwendung 4 aufgerufen wird, oder kann in die Anwendung 4 einkompiliert sein. Zusätzlich kann innerhalb der integritätsgesicherten Prüfsummendatei neben der eigentlichen Prüfsumme auch das gewünschte Verhalten bei einer nicht erfolgreichen Validierung der aktuellen Regeln der Anwendung 4 hinterlegt sein.

Die Anwendung 4 kann in Schritt S7 die Prüfsumme 10 erhalten.

Optional kann die Integrität und Authentizität der Prüfsummendatei, d.h. der Datei, in der die Prüfsumme 10 gespeichert ist, in Schritt S8 validiert werden (z.B. über Überprüfung einer Signatur der Datei). Ist dies nicht möglich, kann vorzugsweise die Ausführung der Anwendung 4 bereits zu diesem Zeitpunkt abgebrochen werden.

Die Anwendung 4 ruft des Weiteren die zugehörigen Regeln aus der Regelwerkdatenbank 2 in Schritt S9, S10 ab und berechnet eine aktuelle Prüfsumme über diese Regeln. Dies bedingt jedoch, dass die Anwendung 4 direkt lesenden Zugriff auf die Regelwerksdatenbank 2 erhalten muss. Dies hat jedoch den Nachteil, dass die in der Datenbank 2 enthaltenen Regeln gegenüber einem nicht-administrativen Laufzeitbenutzer sichtbar gemacht werden muss.

Alternativ kann die Anwendung 4 über eine optionale Schnittstelle 12 (siehe Fig. 1), z.B. einen Proxy, die aktuelle Prüfsumme abrufen. In diesem Fall fragt der Proxy 12 die Regeln aus der Regelwerksdatenbank 2 ab, Schritt S10, und berechnet die Prüfsumme, die er wiederum der Anwendung 4 zur Verfügung stellt, Schritt 511. Die Prüfsumme kann berechnet werden, indem der Proxy 12 oder die Anwendung 4 über die abgefragten Inhalte der Regelwerksdatenbank 2 auf eindeutige Weise eine Prüfsumme (z.B. einen Hashwert) berechnen. Bei der Berechnung des Hashwertes können z.B. einzelne Regeln, die bestimmte Unterverzeichnisse referenzieren bzgl. der Berechnung ausgenommen werden, sodass hierdurch einem OEM-Hersteller oder einem Administrator des Endkunden die Möglichkeit gegeben werden kann, eigene Regelwerke für vordefinierte Dateisystembereiche zu definieren. Die Ausnahme der Berechnung wird erreicht, indem die auszunehmenden Regeln z.B. durch Zuweisung entsprechender Metainformationen zu der Regel gekennzeichnet sind.

Die Anwendung 4 vergleicht anschließend in Schritt S12 die aktuelle und die gespeicherte Prüfsumme. Sind diese identisch, wird die Anwendung 4 in Schritt S13 ausgeführt, andernfalls wird die innerhalb der (vorzugsweise signierten) Prüfsummendatei 10 definierte Aktion ausgeführt. Eine definierte Aktion kann hierbei ein Abbruch der Anwendung 4 oder ein reduzierter Funktionsumfang innerhalb der Anwendung 4 selbst sein. Es kann auch eine Warnung ausgegeben werden, dass auf dem darunterliegenden System, d.h. der Regelwerksdatenbank 2, eine nicht-autorisierte Änderung stattgefunden hat.

Wie in Fig. 4 gezeigt ist, kann das Abrufen der aktuellen Prüfsumme (S9) auch vor dem Abrufen der gespeicherten Prüfsumme (S6) und der Validierung der gespeicherten Prüfsumme (S8) erfolgen. Alternativ können diese Schritte auch gleichzeitig durchgeführt werden.

Die Entscheidung über das weitere Vorgehen erfolgt dann in Schritt S15. Wenn die Validierung der Authentizität und Integrität der gespeicherten Prüfsumme bzw. der Prüfsummendatei 10 in Schritt S8 nicht erfolgreich war, bricht die Anwendung in Schritt S16 ab und der Vorgang endet in Schritt S17.

Wenn die Validierung der Authentizität und Integrität der gespeicherten Prüfsumme bzw. der Prüfsummendatei 10 in Schritt S8 erfolgreich war, wird anschließend Schritt 12 durchgeführt und die gespeicherte Prüfsumme 10 und die aktuelle Prüfsumme verglichen (Schritt S12). Stimmen diese nicht überein, wird die Anwendung ebenfalls abgebrochen oder eine andere definierte Aktion, wie z.B. ein Ausführen in einem geschützten Modus, durchgeführt (Schritt S18). Auch in diesem Fall endet der Vorgang anschließend in Schritt S17. Eine weitere Überprüfung findet hier nicht statt.

Stimmen in Schritt S12 hingegen die gespeicherte Prüfsumme 10 und die aktuelle Prüfsumme überein, wird die Anwendung in einem normalen Modus gestartet und der Vorgang pausiert in Schritt S19 bis zu einem neuen Überprüfungsintervall. Dann beginnt der Vorgang wieder bei Schritt S9 oder alternativ Schritt S6, S8, wie oben beschrieben. Auf diese Weise kann die Anwendung 4 auch während ihrer Laufzeit überwacht und die Regeln auf unautorisierte Änderungen hin überprüft werden.

Es können in den der Anwendung 4 zugeordneten Regeln in der Regelwerksdatenbank Unterbereiche definiert werden. Diese Unterbereiche können von einer Überprüfung ausgenommen werden, sodass diese nicht in die Bestimmung der Prüfsumme fallen. Auf diese Weise können diese Unterbereiche auch von nachgelagerten Einheiten, d.h. nach der ursprünglichen initialen Erstellung, geändert werden.

Es können auch Unterbereiche definiert werden, die überprüft werden sollen. Ein nachgelagerter Hersteller kann dabei seine eigene Prüfsumme erstellen. Hierbei muss dann beispielsweise innerhalb der Prüfsummendatei der Einstiegspunkt für die Validierung der Prüfsumme definiert werden, d.h. welche Unterbereiche zu beachten sind, und dieser auch an den Proxy übergeben werden, damit dieser über die entsprechenden Unterverzeichnisse die Prüfsummen berechnet.

Alternativ können auch die im nachgelagerten Prozess definierten und die ursprünglich vorhandenen Regelbereiche berücksichtigt werden. Das bedeutet, dass sowohl die initial erstellten Regeln als auch durch nachfolgende Benutzer erstellte Regeln in der Regelwerksdatenbank 2 in den Prüfsummen berücksichtigt werden. Das erste Verfahren hat den Vorteil, dass die Lauffähigkeit der nachgelagerten Verzeichnisse und Komponenten der Anwendung 4 nicht von Anpassungen der initial ausgebrachten Komponenten und deren Regelwerk abhängen. Letzteres hat den Vorteil, dass die Integrität der Datenbank 2 insgesamt berücksichtigt werden kann.

Ein OEM-Hersteller oder ein Administrator des Endkunden kann in bestimmten Dateisystembereichen eigene Software ablegen, eigene Regeln für diesen Bereich definieren und kann diese ebenfalls mit dem hier beschriebenen Verfahren integritäts- und authentizitätssichern. Das Verfahren ist somit auf jede Anwendung mit Regeln, die in der Regelwerksdatenbank abgelegt werden, anwendbar und kann insbesondere auch für mehrere Anwendungen eingesetzt werden. In jedem Fall werden die zu der jeweiligen Anwendung gehörenden Regeln, oder ein Teil dieser Regeln, mittels der Prüfsumme überprüft, wie oben beschrieben ist.

Obwohl die vorliegende Erfindung anhand von Ausführungsbeispielen beschrieben wurde, ist sie vielfältig modifizierbar.

### Bezugszeichenliste

- 1: System
- 2: Regelwerksdatenbank
- 4: Anwendung
- 6: Ausführungseinheit/Betriebssystemkern
- 8: Application-Whitelisting-Komponente
- 10: Prüfsumme/Prüfsummendatei
- 12: Schnittstelle/Proxy
- S1-S13: Verfahrensschritte
- S15-S19: Verfahrensschritte

## Patentansprüche

1. Verfahren zum Überprüfen der Integrität einer Regelwerksdatenbank (2) vor dem Ausführen einer Anwendung (4), wobei in der Regelwerksdatenbank (2) eine oder mehrere Ausführungsberechtigungen für eine oder mehrere Anwendungen (4) gespeichert sind, wobei die Regelwerksdatenbank (2) des Weiteren Regeln für die eine oder mehreren Anwendungen (4) aufweist, wobei das Verfahren aufweist:
vor dem Ausführen einer Anwendung (4), Abrufen (S2) einer Ausführungsberechtigung der auszuführenden Anwendung (4) von der Regelwerksdatenbank (2) durch eine Ausführungseinheit (6) und Überprüfen (S4) der Ausführungsberechtigung,
wenn die Überprüfung (S4) der Ausführungsberechtigung der auszuführenden Anwendung (4) durch die Ausführungseinheit (6) positiv ist, Vergleichen (S12), durch die Anwendung (4), einer gespeicherten Prüfsumme (10) der in der Regelwerksdatenbank (2) gespeicherten Regeln für diese Anwendung (4) mit einer aktuellen Prüfsumme der in der Regelwerksdatenbank (2) gespeicherten Regeln für diese Anwendung (4), und
wenn die gespeicherte Prüfsumme (10) mit der aktuellen Prüfsumme übereinstimmt, Starten (S13) der Anwendung (4).

2. Verfahren nach Anspruch 1, wobei, wenn die gespeicherte Prüfsumme (10) der in der Regelwerksdatenbank (2) gespeicherten Regeln für diese Anwendung (4) mit der aktuellen Prüfsumme nicht übereinstimmt, die Anwendung (4) abbricht (S17, S18), in einem geschützten Modus startet (S17, S18) oder mit Ausgabe einer Warnung startet (S17, S18).

3. Verfahren nach einem der vorhergehenden Ansprüche, wobei die Regeln der auszuführenden Anwendung (4) in der Regelwerksdatenbank (2) in mehrere Bereiche aufgeteilt sind, wobei ein oder mehrere Bereiche aus der Berechnung der Prüfsumme ausgenommen sind.

4. Verfahren nach einem der vorhergehenden Ansprüche, wobei die gespeicherte Prüfsumme (10) integritäts- und authentizitätsgesichert auf einem Dateisystem des Systems (1) oder auf einem Server gespeichert ist und wobei die Anwendung (4) die gespeicherte Prüfsumme (10) von dem Dateisystem oder dem Server abruft (S6, S7) oder wobei die gespeicherte Prüfsumme (10) integritäts- und authentizitätsgesichert in der Anwendung (4) gespeichert ist.

5. Verfahren nach einem der vorhergehenden Ansprüche, wobei die Anwendung (4) die Regeln, die der auszuführenden Anwendung (4) zugeordnet sind, aus der Regelwerksdatenbank (2) über eine zwischengeschaltete Schnittstelle (12), insbesondere einen Proxy, abfragt (S9).

6. Verfahren nach einem der vorhergehenden Ansprüche, wobei die Regeln der auszuführenden Anwendung (4) in der Regelwerksdatenbank (2) in mehrere Bereiche aufgeteilt sind, wobei die Anwendung (4) für die mehreren Bereiche jeweils eine aktuelle Prüfsumme bestimmt (S10) und mit korrespondierenden gespeicherten Prüfsummen (10) vergleicht (S12).

7. Verfahren nach Anspruch 6, wobei in der auszuführenden Anwendung (4) definiert ist, welche der mehreren Bereiche zu prüfen sind.

8. Verfahren nach einem der vorhergehenden Ansprüche, wobei die Anwendung (4) die Prüfsumme der in der Regelwerksdatenbank (2) gespeicherten Regeln für diese Anwendung (4) mit einer aktuellen Prüfsumme der in der Regelwerksdatenbank (2) gespeicherten Regeln für diese Anwendung (4) in vordefinierten Abständen vergleicht (S19).

9. Verfahren nach einem der vorhergehenden Ansprüche, wobei die Ausführungseinheit (6) die Anwendung (4) durch Aufruf eines Prozesses der Anwendung startet (S5), wobei der Aufruf des Prozesses die Überprüfung der Prüfsumme der Regelwerksdatenbank (2) startet.

10. System (1) zum Überprüfen der Integrität einer Regelwerksdatenbank (2) vor dem Ausführen einer Anwendung (4), mit:
einer Regelwerksdatenbank (2), in der eine oder mehrere Ausführungsberechtigungen für eine oder mehrere Anwendungen (4) gespeichert sind, wobei die Regelwerksdatenbank (2) des Weiteren Regeln für die eine oder mehreren Anwendungen (4) aufweist, und
einer Ausführungseinheit (6), die dazu ausgebildet ist, eine Anwendung (4) auszuführen,
wobei die Ausführungseinheit (6) dazu ausgebildet ist, vor dem Ausführen der Anwendung (4) eine Ausführungsberechtigung der auszuführenden Anwendung (4) von der Regelwerksdatenbank (2) abzurufen und zu überprüfen,
wobei, wenn die Überprüfung der Ausführungsberechtigung der auszuführenden Anwendung (4) durch die Ausführungseinheit (6) positiv ist, die Anwendung (4) dazu ausgebildet ist, eine gespeicherte Prüfsumme (10) der in der Regelwerksdatenbank (2) gespeicherten Regeln für diese Anwendung (4) mit einer aktuellen Prüfsumme der in der Regelwerksdatenbank (2) gespeicherten Regeln für diese Anwendung (4) zu vergleichen, und
wenn die gespeicherte Prüfsumme (10) mit der aktuellen Prüfsumme übereinstimmt, die Anwendung (4) dazu ausgebildet ist, zu starten.

11. System nach einem der vorhergehenden Ansprüche, wobei die Regeln der auszuführenden Anwendung (4) in der Regelwerksdatenbank (2) in mehrere Bereiche aufgeteilt sind, wobei ein oder mehrere Bereiche aus der Berechnung der Prüfsumme ausgenommen sind.

12. System nach einem der vorhergehenden Ansprüche, wobei die gespeicherte Prüfsumme (10) integritäts- und authentizitätsgesichert auf einem Dateisystem des Systems (1) oder auf einem Server gespeichert ist oder wobei die gespeicherte Prüfsumme (10) integritäts- und authentizitätsgesichert in der Anwendung (4) gespeichert ist.

13. System nach einem der vorhergehenden Ansprüche, wobei das System (1) eine Schnittstelle (12), insbesondere einen Proxy, aufweist, der zwischen der Anwendung (4) und der Regelwerksdatenbank (2) angeordnet ist, und wobei die Anwendung (4) dazu ausgebildet ist, die Regeln, die der auszuführenden Anwendung (4) zugeordnet sind, aus der Regelwerksdatenbank (2) über die Schnittstelle (12) abzufragen.

14. System nach einem der vorhergehenden Ansprüche, wobei die Regeln der auszuführenden Anwendung (4) in der Regelwerksdatenbank (2) in mehrere Bereiche aufgeteilt sind, wobei die Anwendung (4) dazu ausgebildet ist, für die mehreren Bereiche jeweils eine aktuelle Prüfsumme zu bestimmen und mit korrespondierenden gespeicherten Prüfsummen (10) zu vergleichen.

15. Computerprogrammprodukt, welches auf einer programmgesteuerten Einrichtung die Durchführung des Verfahrens nach einem der Ansprüche 1 bis 9 veranlasst.
